(19) **Europäisches Patentamt**
**European Patent Office**
**Office européen des brevets**

(11) **EP 4 645 993 A1**

(12) **EUROPEAN PATENT APPLICATION**
published in accordance with Art. 153(4) EPC

(43) Date of publication:
05.11.2025 Bulletin 2025/45

(21) Application number: 23910757.6

(22) Date of filing: 27.12.2023

(51) International Patent Classification (IPC):
*H04W 72/21* (2023.01)   *H04W 72/53* (2023.01)
*H04W 72/00* (2023.01)

(52) Cooperative Patent Classification (CPC):
**H04L 5/00; H04W 72/00; H04W 72/12;**
**H04W 72/21; H04W 72/53**

(86) International application number:
**PCT/CN2023/142462**

(87) International publication number:
**WO 2024/140839 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 29.12.2022 CN 202211714270

(71) Applicant: **Vivo Mobile Communication Co., Ltd.**
**Dongguan, Guangdong 523863 (CN)**

(72) Inventors:
• **LI, Na**
**Dongguan, Guangdong 523863 (CN)**
• **ZENG, Chaojun**
**Dongguan, Guangdong 523863 (CN)**

(74) Representative: **Shieldmark**
**P.O. Box 90471**
**2509 LL The Hague (NL)**

(54) **UCI TRANSMISSION METHOD AND APPARATUS, COMMUNICATION DEVICE, AND STORAGE MEDIUM**

(57) This application discloses a UCI transmission method and apparatus, a communication device, and a storage medium, and relates to the field of wireless communication technologies. A UCI transmission method according to embodiments of this application includes: A terminal determines first UCI, where the first UCI is used for indicating a configured grant physical uplink shared channel CG PUSCH transmission occasion that will not be used by the terminal, and/or is used for indicating an end of data burst of the terminal; and the terminal transmits the first UCI on a physical uplink control channel PUCCH or a CG PUSCH. Therefore, transmission of the first UCI can be supported. This is beneficial to improving effectiveness of a communication system.

A terminal determines first UCI, where the first UCI is used for indicating a configured grant physical uplink shared channel CG PUSCH transmission occasion that will not be used by the terminal, and/or is used for indicating an end of data burst of the terminal — 300

The terminal transmits the first UCI on a physical uplink control channel PUCCH or a CG PUSCH — 301

**FIG. 3**

Description

## CROSS-REFERENCE TO RELATED APPLICATIONS

This application claims priority to Chinese Patent Application No.202211714270.X filed on December 29, 2022, which is incorporated herein by reference in its entirety.

## TECHNICAL FIELD

This application relates to the field of wireless communication technologies, and in particular, to a UCI transmission method and apparatus, a communication device, and a storage medium.

## BACKGROUND

In an extended reality (XR) service, due to service requirements such as a low delay and periodicity of the service, a configured grant (CG) physical uplink shared channel (PUSCH) is one of scheduling manners suitable for the XR service. To improve resource utilization, a terminal (also referred to as user equipment, UE) may transmit a type of uplink control information (UCI) to inform a base station of a CG PUSCH transmission occasion that will not be used by the terminal, and the base station may schedule, based on the information, a CG PUSCH not used by specific UE to another UE or a channel.

However, currently, there is no clear solution to how to specifically transmit the UCI used for indicating the CG PUSCH transmission occasion that will not be used by the terminal.

## SUMMARY

Embodiments of this application provide a UCI transmission method and apparatus, a communication device, and a storage medium, to resolve a problem of how to transmit UCI used for indicating a CG PUSCH transmission occasion not used by a terminal.

According to a first aspect, an embodiment of this application provides a UCI transmission method, including:

a terminal determines first UCI, where the first UCI is used for indicating a configured grant physical uplink shared channel CG PUSCH transmission occasion that will not be used by the terminal, and/or is used for indicating an end of data burst of the terminal; and
the terminal transmits the first UCI on a physical uplink control channel PUCCH or a CG PUSCH.

According to a second aspect, an embodiment of this application provides a UCI transmission apparatus, used in a terminal and including:

a determining module, configured to determine first UCI, where the first UCI is used for indicating a configured grant physical uplink shared channel CG PUSCH transmission occasion that will not be used by the terminal, and/or is used for indicating an end of data burst of the terminal; and
a transmission module, configured to transmit the first UCI on a physical uplink control channel PUCCH or a CG PUSCH.

According to a third aspect, an embodiment of this application provides a terminal. The terminal includes a processor and a memory. The memory stores a program or instructions that can run on the processor. The program or instructions, when being executed by the processor, implement the method according to the first aspect.

According to a fourth aspect, an embodiment of this application provides a terminal, including a processor and a communication interface. The processor is configured to: determine first UCI, where the first UCI is used for indicating a CG PUSCH transmission occasion that will not be used by the terminal, and/or is used for indicating an end of data burst of the terminal. The communication interface is configured to: transmit the first UCI on a PUCCH or a CG PUSCH.

According to a fifth aspect, an embodiment of this application provides a UCI transmission system, including: a terminal and a network-side device, where the terminal is configured to perform the UCI transmission method according to the first aspect.

According to a sixth aspect, an embodiment of this application provides a readable storage medium. The readable storage medium stores a program or instructions, and the program or instructions, when being executed by a processor, implement the method according to the first aspect.

According to a seventh aspect, an embodiment of this application provides a chip. The chip includes a processor and a communication interface. The communication interface is coupled to the processor. The processor is configured to run a program or instructions to implement the method according to the first aspect.

According to an eighth aspect, an embodiment of this application provides a computer program/program product. The computer program/program product is stored in a storage medium. The computer program/program product is executed by at least one processor to implement the method according to the first aspect.

In embodiments of this application, after determining first UCI that needs to be sent to a network-side device (for example, a base station), a terminal may transmit the first UCI by using a PUCCH or a CG PUSCH, to support transmission of the first UCI, so that the network-side device receives corresponding indication information, thereby helping improve effectiveness of a communication system.

## BRIEF DESCRIPTION OF THE DRAWINGS

FIG. 1 is a block diagram of a wireless communication system according to an embodiment of this application;
FIG. 2 is a diagram of type 1 and type 2 CG PUSCHs according to an embodiment of this application;
FIG. 3 is a schematic flowchart of a UCI transmission method according to an embodiment of this application;
FIG. 4 is a diagram of a structure of a UCI transmission apparatus according to an embodiment of this application;
FIG. 5 is a diagram of a structure of a communication device according to an embodiment of this application; and
FIG. 6 is a diagram of a hardware structure of a terminal according to an embodiment of this application.

## DETAILED DESCRIPTION

The technical solutions in embodiments of this application are clearly described in the following with reference to the accompanying drawings in embodiments of this application. Apparently, the described embodiments are merely some rather than all of embodiments of this application. All other embodiments obtained by a person skilled in the art based on embodiments of this application fall within the protection scope of this application.

The terms "first", "second", and the like in the specification and claims of this application are used to distinguish between similar objects, but are not necessarily used to describe a specific order or sequence. It should be understood that terms used in such a way are interchangeable under proper conditions, so that the embodiments of this application can be implemented in an order different from the order shown or described herein. In addition, objects distinguished by "first" and "second" usually belong to a same type, and a quantity of objects is not limited. For example, there may be one first object or a plurality of first objects. In addition, in the specification and the claims, "and/or" represents at least one of the connected objects, and the character "/" usually indicates an "or" relationship between the associated objects.

It should be noted that the technologies described in embodiments of this application are not limited to a long term evolution (Long Term Evolution, LTE)/LTE-advanced (LTE-Advanced, LTE-A) system, and may further be used in other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. The terms "system" and "network" in embodiments of this application may usually be interchangeably used, and the described technologies may be used in the systems and wireless technologies mentioned above, or may be used in another system and wireless technology. The following descriptions describe a new radio (New Radio, NR) system for example purposes, and NR terms are used in most of the following descriptions, but the technologies may alternatively be applied to applications other than an NR system application, such as a sixth generation (6th Generation, 6G) communication system.

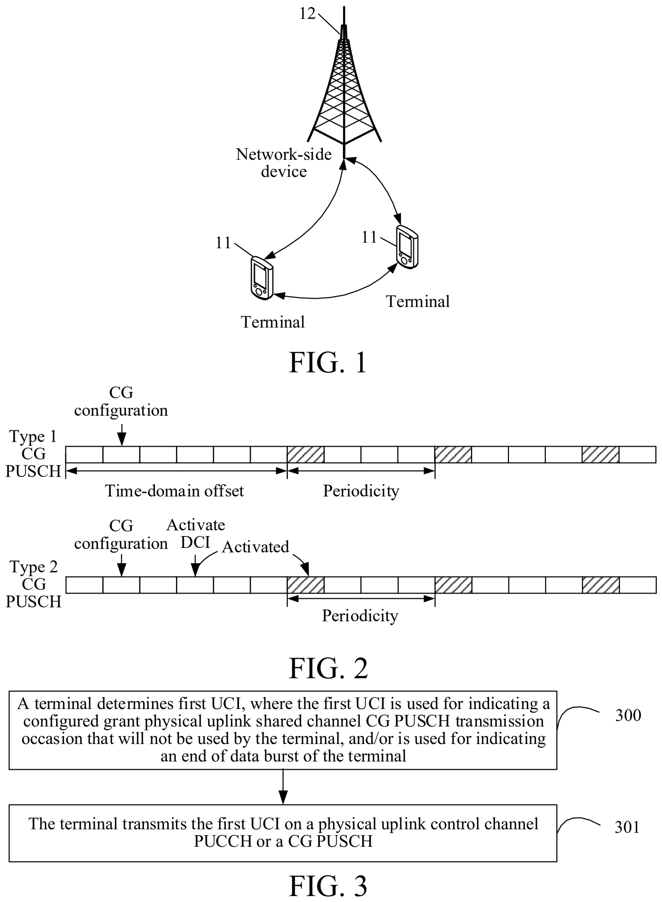

FIG. 1 is a block diagram of a wireless communication system according to an embodiment of this application. As shown in FIG. 1, the wireless communication system includes a terminal 11 and a network-side device 12. The terminal 11 may be a terminal-side device, for example, a mobile phone, a tablet computer (Tablet Personal Computer), a laptop computer (Laptop Computer) (or referred to as a notebook computer), a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart household (a household device that has a wireless communication function, for example, a refrigerator, a television, a washing machine, or furniture), a game console, a personal computer (personal computer, PC), a teller machine, or a self-service machine. The wearable device includes: a smart watch, a smart band, a smart headphone, smart glasses, smart jewelry (a smart bracelet, a smart bracelet, a smart ring, a smart necklace, a smart anklet, a smart anklet, and the like), a smart wristband, smart clothing, and the like. It should be noted that, a specific type of the terminal 11 is not limited in embodiments of this application. The network-side device 12 may include an access network device or a core network device. The access network device may also be referred to as a radio access network device, a radio access network (Radio Access Network, RAN), a radio access network function, or a radio access network unit. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another suitable term in the field. As long as the same technical effects are achieved, the base station is not limited to a specific technology vocabulary. It should be noted that, only a base station in an NR system is used as an example for description in embodiments of this application, but a specific type of the base station is not limited.

To better understand the solutions in embodiments of this application, related technical content of embodiments of this application is described below.

(1) Extended reality (eXtended Reality, XR) service

XR refers to all real and virtual combined environments and human computer interactions generated by computer technologies and wearable devices. XR includes representative forms such as augmented reality (Augmented Reality, AR), mixed reality (Mixed Reality, MR), and virtual reality (Virtual Reality, VR), and cross fields thereof. A level of a virtual world varies from a partial sense input to a fully immersive virtual reality. A key aspect of XR is expansion of human experience, especially experience related to sense of existence (represented by VR) and cognitive learning (represented by AR).

For a VR service, an uplink (Uplink, UL) is mainly transmission of dense small data packets. These small data packets may carry information such as a gesture, control, and touch, and are used as input and reference for downlink presentation data. Transmission of multimedia data such as a video and audio is mainly used in a downlink, and immersive feelings are provided to a user by receiving and presenting the multimedia data in time. The following uses video data as an example. Data packets periodically or quasi-periodically arrive, a data rate may reach tens or even hundreds of Mbps, a typical value of an FPS (frame per second) is 60 or 120, an interval between adjacent data packets is approximately 1/FPS second, the data usually needs to be successfully transmitted within 10 ms on an air interface, and a transmission success rate needs to be not less than 99% or even 99.9%.

For an AR service, in addition to transmitting the foregoing dense small data packets, the uplink may further transmit multimedia data such as a video and audio. Service characteristics thereof are similar to those of the downlink. A data rate is usually low, for example, is tens of Mbps at most. A time limit for transmission on an air interface may further be relaxed. For example, the transmission usually needs to be successfully performed within 60 ms. In addition, for an XR UL video service, sizes of data packets in different frames may also vary. Downlink data transmission characteristics are substantially consistent with those of the VR service.

(2) CG PUSCH

Uplink CG PUSCH transmission, as a low-delay and low-overhead uplink transmission solution, mainly includes type 1 (type 1) and type 2 (type 2) CG PUSCHs. The type 1 CG PUSCH directly takes effect after radio resource control (Radio Resource Control, RRC) configuration (including a periodicity, a slot offset within the periodicity, a time-frequency domain resource, and the like) is performed, and does not need additional activation signaling. The type 2 CG PUSCH needs not only RRC configuration but also L1 signaling (downlink control information (Downlink Control Information, DCI)) activation to take effect. The CG PUSCH is used in typical service scenarios such as ultra-reliable and low latency communications (Ultra-reliable and Low Latency Communications, URLLC). To further satisfy requirements of URLLC services for lower latency and higher reliability, in NR Rel-16, the CG PUSCH is further enhanced. The Rel-16 supports a network side in simultaneously configuring and activating a plurality of sets of type 1 and/or type 2 CG PUSCHs for UE.

FIG. 2 is a diagram of type 1 and type 2 CG PUSCHs according to an embodiment of this application. A network semi-statically pre-configures a resource. When a data packet arrives, the data packet may be directly transmitted on a configured or activated CG resource.

To further improve transmission reliability, a configured grant (configured grant) supports repeated transmission (Repetition) of a transport block (Transport Block, TB). A quantity of repeated transmission times and a redundancy version (Redundancy version, RV) sequence corresponding to the repeated transmission are configured through RRC.

The UCI transmission method provided in embodiments of this application is described in detail below through some embodiments and application scenarios thereof with reference to the accompanying drawings.

FIG. 3 is a schematic flowchart of a UCI transmission method according to an embodiment of this application. As shown in FIG. 3, the method includes the following steps.

Step 300: A terminal determines first UCI, where the first UCI is used for indicating a configured grant physical uplink shared channel CG PUSCH transmission occasion that will not be used by the terminal, and/or is used for indicating an end of data burst of the terminal.

Step 301: The terminal transmits the first UCI on a physical uplink control channel PUCCH or a CG PUSCH.

Optionally, the first UCI may include UCI used for indicating the CG PUSCH transmission occasion that will not be used by the terminal, and/or UCI used for indicating the end of data burst (end of data burst) of the terminal. Being used for indicating the CG PUSCH transmission occasion that will not be used by the terminal may also be explained as being used for indicating a CG PUSCH resource/transmission occasion that is not used by/that may be released by/that is redundant for the terminal. For example, the terminal does not need to transmit a corresponding service on a specific/some specific configured or activated CG PUSCH transmission occasions. Therefore, the terminal may indicate, to the base station through the first UCI, that there is no data to be transmitted on these CG PUSCH transmission occasions, and the base station may perform other scheduling or transmission on these resources.

For the UCI indicating the CG PUSCH transmission occasion that will not be used by the terminal, accurately receiving the information in time helps the base station recycle and utilize the resource that will not be used, thereby helping improve system resource utilization and throughput. Alternatively, for the UCI indicating the end of data burst (end of data burst) of the terminal, accurately receiving the information in time helps the base station properly allocate a transmission resource to the terminal. Therefore, embodiments of this application provide corresponding solutions to how to specifically transmit (for example, encoding, mapping, and multiplexing) the UCI.

Optionally, the first UCI may be a part (for example, using current CG-UCI bit information to indicate the CG-PUSCH transmission occasion that is not used) and/or an extended part (for example, adding, based on the current CG-UCI bit information, new bit information to indicate the CG-PUSCH transmission occasion that is not used) of a current UCI type (for example, CG-UCI), or may be new UCI.

Optionally, the first UCI may be transmitted on the physical uplink control channel (Physical Uplink Control Channel, PUCCH) or the CG PUSCH.

In embodiments of this application, after determining first UCI that needs to be sent to a network-side device (for example, a base station), a terminal may transmit the first UCI by using a PUCCH or a CG PUSCH, to support transmission of the first UCI, so that the network-side device receives corresponding indication information, thereby helping improve effectiveness of a communication system.

Optionally, that the terminal transmits the first UCI on the PUCCH includes:

The terminal performs, in a case that time-domain resources of a first PUCCH used for carrying the first UCI and a second PUCCH overlap, transmission based on any one of the following:

> discarding the first UCI or UCI carried on the second PUCCH;
> multiplexing the first UCI and all or a part of UCI carried on the second PUCCH on one PUCCH for transmission;
> determining, based on UCI content carried on the second PUCCH, transmission modes of the first UCI and the UCI carried on the second PUCCH; or
> determining, based on a priority of the second PUCCH, transmission modes of the first UCI and the UCI carried on the second PUCCH.

The second PUCCH is a PUCCH that carries at least one of a hybrid automatic repeat request-acknowledgment (Hybrid Automatic Repeat request-ACKnowledgment, HARQ-ACK), channel state information (Channel State Information, CSI), and a scheduling request (Scheduling Request, SR).

For example, in a case that the terminal transmits the first UCI by using the PUCCH, when time-domain resources of the first PUCCH used for carrying the first UCI and the second PUCCH (that is, the PUCCH that carries at least one of the HARQ-ACK, the CSI, and the SR) overlap, the terminal may have a plurality of processing manners.

Optionally, the terminal may discard the first UCI or discard UCI carried on the second PUCCH.

Optionally, the terminal may multiplex the first UCI and all or a part of UCI carried on the second PUCCH on one PUCCH for transmission.

For example, the second PUCCH carries the HARQ-ACK, the SR, and the CSI, or the second PUCCH carries the CSI. If the first UCI is multiplexed with all of the HARQ-ACK, the SR, and the CSI that are carried on the second PUCCH, or the first UCI is multiplexed with the CSI, how to perform encoding and/or an encoding rate need/needs to be considered. Examples are as follows.

> a. Join encoding: The first UCI is jointly encoded with the HARQ-ACK (if any), the SR (if any), and a CSI part 1, and a CSI part 2 is independently encoded. Alternatively, the HARQ-ACK (if any) and the SR (if any) are jointly encoded with a CSI part 1, and the first UCI is jointly encoded with a CSI part 2.
> b. Join encoding of the first UCI and another piece of UCI is not supported, or encoding of the first UCI and encoding of the another piece of UCI are separately performed. In this case, a part of the another piece of UCI may need to be discarded. For example, if the CSI includes a CSI part 2, the CSI part 2 is discarded, the first UCI is multiplexed with the another piece of UCI, the HARQ-ACK (if any) and the SR (if any) are jointly encoded with a CSI part 1 (if any), and the first UCI is independently encoded. Alternatively, if the CSI includes a part 2, multiplexing of the first UCI and another piece of UCI that includes the CSI part 2 is not supported, and the first UCI or the another piece of UCI is discarded.

Alternatively, if transmission of multiplexed UCI exceeds a maximum bit rate (a bit rate configured for a PUCCH on which the UCI is located) on the PUCCH, a part of the UCI is discarded, for example, a part or all of a CSI part 2 and/or a part or all of a CSI part 1 are discarded.

Optionally, a transmission mode may be determined based on UCI content carried on the second PUCCH.

For example, if the second PUCCH carries at least one of the HARQ-ACK, the SR, and the CSI part 1, the first UCI and UCI carried on the second PUCCH are multiplexed on one PUCCH for transmission. The first UCI may be independently encoded.

For example, if the UCI carried on the second PUCCH includes the CSI part 2, the CSI part 2 may be discarded, and the first UCI is multiplexed with a part other than the CSI part 2 of the UCI on the second PUCCH. The first UCI may be independently encoded.

For example, if the UCI carried on the second PUCCH includes the CSI part 2, the first UCI may be discarded or the UCI carried on the second PUCCH may be discarded.

Optionally, the terminal may determine, based on a priority of the second PUCCH, how to process the first UCI and the UCI carried on the second PUCCH (for example, discard the first UCI or the UCI carried on the second PUCCH, or multiplex the first UCI and all or a part of UCI carried on the second PUCCH on one PUCCH for transmission).

For example, if the priority of the second PUCCH is higher, the terminal may discard the first UCI or multiplex the first UCI and all or a part of the UCI carried on the second PUCCH on one PUCCH for transmission.

For example, if the priority of the second PUCCH is lower, the terminal may discard the UCI carried on the second PUCCH.

For example, if the priority of the second PUCCH is the same as a priority of the first PUCCH, the first UCI may be multiplexed with the UCI carried on the second PUCCH. Otherwise, UCI carried on a PUCCH with a lower priority is discarded.

Optionally, a priority of the first UCI may be a high priority or a low priority, the priority of the first UCI may be predefined in a protocol, the priority of the first UCI may be configured or indicated by a base station, or the priority of the first UCI is the same as a priority of a channel on which the first UCI is located.

Optionally, a priority of the first PUCCH may be a high priority or a low priority, the priority of the first PUCCH may be predefined in a protocol, the priority of the first PUCCH may be configured or indicated by a base station, or the priority of the first PUCCH may be determined based on UCI carried on the first PUCCH, for example, the priority of the first PUCCH is equal to a highest priority of the UCI carried on the first PUCCH. Optionally, that the terminal transmits the first UCI on the CG PUSCH includes:

The terminal determines, based on a higher layer configuration or an indication of DCI, a quantity of resource elements (Resource Elements, REs) occupied by the first UCI.

For example, the terminal may determine, based on a first parameter (for example, a betaOffset parameter) configured at a high layer and/or indicated by activated DCI, the quantity of REs occupied by the first UCI.

For example, it is assumed that the first UCI is mapped starting from the first one non-DMRS symbol after the first one DMRS. In this case, the terminal may calculate, by using the following formula, the quantity of REs occupied by the first UCI:

$$Q'_{\text{X-UCI}} = \min\left\{ \left\lceil \frac{(O_{\text{X-UCI}} + L_{\text{X-UCI}}) \cdot \beta_{\text{offset}}^{\text{PUSCH}} \cdot \sum_{l=0}^{N_{\text{symb,all}}^{\text{PUSCH}}-1} M_{\text{sc}}^{\text{UCI}}(l)}{\sum_{r=0}^{C_{\text{UL-SCH}}-1} K_r} \right\rceil, \left\lceil \alpha \cdot \sum_{l=l_0}^{N_{\text{symb,all}}^{\text{PUSCH}}-1} M_{\text{sc}}^{\text{UCI}}(l) \right\rceil \right\}$$

In the formula, $Q'_{\text{X-UCI}}$ represents the quantity of REs occupied by the first UCI. $O_{\text{X-UCI}}$ represents a quantity of bits of the first UCI. $L_{\text{X-UCI}}$ represents a quantity of cyclic redundancy check (Cyclic redundancy check, CRC) bits corresponding to the first UCI. $\beta_{\text{offset}}^{\text{PUSCH}} = \beta_{\text{offset}}^{\text{X-UCI}}$, $\beta_{\text{offset}}^{\text{X-UCI}}$ represents a first parameter value corresponding to the first UCI. $M_{\text{sc}}^{\text{UCI}}(l)$ represents a quantity of REs that may be used for transmission of UCI on an OFDM symbol $l$ in PUSCH transmission, where $l$ = 0, 1, 2, ..., and $N_{\text{symb,all}}^{\text{PUSCH}} - 1$. $N_{\text{symb,all}}^{\text{PUSCH}}$ represents a total quantity of OFDM symbols, including all OFDM symbols used for a DMRS, in the PUSCH transmission. For an OFDM symbol $l$ that carries a DMRS in the PUSCH transmission, $M_{\text{sc}}^{\text{UCI}}(l) = 0$. For an OFDM symbol $l$ that does not carry a DMRS in the PUSCH transmission,

$$M_{sc}^{UCI}(l) = M_{sc}^{PUSCH} - M_{sc}^{PT-RS}(l)$$, where $M_{sc}^{PUSCH}$ represents a scheduled bandwidth for the PUSCH transmission, and is represented as a quantity of subcarriers, and $M_{sc}^{PT-RS}(l)$ represents a quantity of subcarriers of a phase-tracking reference signal (Phase-tracking reference signal, PTRS) carried on the OFDM symbol $l$ in the PUSCH transmission. $K_r$ represents a size of an $r^{th}$ code block of an uplink shared channel (Uplink Shared Channel, UL-SCH) of the PUSCH, where r = 0, 1, 2, ..., and $C_{UL-SCH}$ - 1. $C_{UL-SCH}$ represents a quantity of code blocks of the UL-SCH of the PUSCH. $\alpha$ is a parameter, for example, scaling, configured at a higher layer. $l_0$ represents a symbol index of the first one OFDM symbol without a DMRS after the first one DMRS on the PUSCH.

Optionally, higher layer signaling RRC may be used for separately configuring betaOffset parameters corresponding to the first UCI, the CG-UCI, the HARQ-ACK, the CSI part 1, and the CSI part 2. Alternatively, the higher layer signaling RRC may be used for configuring or pre-defining a same betaOffset parameter corresponding to the first UCI and the CG-UCI/the HARQ-ACK/the CSI part 1/the CSI part 2.

Optionally, that the terminal transmits the first UCI on the CG PUSCH includes:

The terminal jointly encodes, in a case that second UCI is multiplexed on a first CG PUSCH used for carrying the first UCI, the first UCI and the second UCI or a part of the second UCI.

The second UCI includes at least one of the CG-UCI, the HARQ-ACK, and the CSI.

For example, the CG-UCI is multiplexed on the first CG PUSCH, and the terminal may jointly encode the first UCI and the CG-UCI. Optionally, the first UCI may be appended with the CG-UCI (where a sequence may be defined in a protocol or configured at a higher layer). Alternatively, the first UCI is a part of the CG-UCI (to be specific, the CG-UCI includes two parts of information, where one part is information in current CG-UCI, and one part is information of the first UCI).

For example, the HARQ-ACK is multiplexed on the first CG PUSCH, and the terminal may jointly encode the first UCI and the HARQ-ACK. Optionally, the first UCI may be appended with the HARQ-ACK (where a sequence may be specified in a protocol or configured at a higher layer).

For example, the CG-UCI and the HARQ-ACK are multiplexed on the first CG PUSCH, and the terminal may jointly encode the first UCI, the CG-UCI, and the HARQ-ACK. Optionally, the first UCI may be appended with the CG-UCI and the HARQ-ACK (where a sequence may be specified in a protocol or configured at a higher layer). Alternatively, the first UCI is a part of the CG-UCI (to be specific, the CG-UCI includes two parts of information, where one part is information in current CG-UCI, and one part is information of the first UCI).

For example, the CG-UCI, the HARQ-ACK, and the CSI are multiplexed on the first CG PUSCH, and the terminal may jointly encode the first UCI, the CG-UCI, and the HARQ-ACK. Optionally, the first UCI may be appended with the CG-UCI and the HARQ-ACK (where a sequence may be specified in a protocol or configured at a higher layer). Alternatively, the first UCI is a part of the CG-UCI (to be specific, the CG-UCI includes two parts of information, where one part is information in current CG-UCI, and one part is information of the first UCI). In addition, the CSI is independently encoded.

Optionally, a quantity of REs occupied after the first UCI is jointly encoded with the second UCI is determined based on one of a first parameter corresponding to the first UCI and a first parameter corresponding to the second UCI, or is determined based on a maximum value, a minimum value, or an average value of the first parameter corresponding to the first UCI and the first parameter corresponding to the second UCI.

For example, the first UCI and the second UCI correspond to a same first parameter (for example, a betaOffset parameter). The terminal may calculate, by using the same first parameter, the quantity of REs occupied after the first UCI is jointly encoded with the second UCI.

For example, the first UCI and the second UCI respectively correspond to different first parameters (for example, betaOffset parameters). The terminal may determine a first parameter according to a predefined rule (for example, stipulated in a protocol), to calculate the quantity of REs occupied after the first UCI is jointly encoded with the second UCI.

For example, the first UCI and the second UCI respectively correspond to different first parameters (for example, betaOffset parameters). The terminal may calculate, by using a maximum value, a minimum value, or an average value of the first parameter corresponding to the first UCI and the first parameter corresponding to the second UCI, the quantity of REs occupied after the first UCI is jointly encoded with the second UCI. Alternatively, the terminal may calculate, according to a protocol stipulation or based on a base station configuration by using one of the first parameter corresponding to the first UCI and the first parameter corresponding to the second UCI, the quantity of REs occupied after the first UCI is jointly encoded with the second UCI.

Optionally, that the terminal transmits the first UCI on the CG PUSCH includes:

The terminal separately encodes, in a case that second UCI is multiplexed on a first CG PUSCH used for carrying the first UCI, the first UCI and the second UCI.

The second UCI includes at least one of the CG-UCI, the HARQ-ACK, and the CSI.

For example, the CG-UCI is multiplexed on the first CG PUSCH, and the terminal may separately encode the first UCI and the CG-UCI. Optionally, the network-side device may separately configure or indicate first parameters (for example, betaOffset parameters) corresponding to the first UCI and the CG-UCI, so that the terminal determines quantities of REs occupied by the first UCI and the CG-UCI on the PUSCH.

For example, the HARQ-ACK is multiplexed on the first CG PUSCH, and the terminal may separately encode the first UCI and the HARQ-ACK. Optionally, the network-side device may separately configure or indicate first parameters (for example, betaOffset parameters) corresponding to the first UCI and the HARQ-ACK, so that the terminal determines quantities of REs occupied by the first UCI and the HARQ-ACK on the PUSCH.

For example, the CG-UCI and the HARQ-ACK are multiplexed on the first CG PUSCH, and the terminal may separately encode the first UCI and the CG-UCI/HARQ-ACK. Optionally, the terminal may jointly encode the CG-UCI and the HARQ-ACK, and independently encode the first UCI.

Optionally, in a case that the terminal multiplexes the CSI and at least one of the CG-UCI and the HARQ-ACK on the first CG PUSCH, the method further includes:

The terminal discards the CSI or the first UCI; or

the terminal discards, in a case that the CSI includes a second part (the CSI part 2), the second part of the CSI.

For example, when the terminal multiplexes all of the CG-UCI, the HARQ-ACK, and the CSI on the first CG PUSCH, and separately encodes the first UCI and another piece of UCI (for example, the CG-UCI and/or the HARQ-ACK), the terminal may discard the CSI or the first UCI, or discard the CSI part 2 (if any), and transmits remaining UCI.

Optionally, in a case that the terminal multiplexes the CSI on the first CG PUSCH, and the CSI includes a first part (the CSI part 1) and the second part (the CSI part 2), the method further includes:

The terminal discards the second part of the CSI, and transmits the first part of the CSI; or
the terminal discards the CSI.

For example, in a case that the first UCI is multiplexed and the CSI (where the CSI includes a part 1 and a part 2) is further multiplexed on the first CG PUSCH, the terminal may discard the CSI part 2, and transmit the CSI part 1; or the terminal may discard the CSI, and transmit remaining UCI.

Optionally, in a case that the terminal multiplexes the CSI on the first CG PUSCH and the CSI includes only a first part, the method further includes:

The terminal transmits the first part of the CSI; or

the terminal discards the CSI.

For example, in a case that the first UCI is multiplexed and the CSI (where the CSI includes only a part 1) is further multiplexed on the first CG PUSCH, the terminal may transmit the CSI part 1; or the terminal discards the CSI.

For example, in a case that the first UCI is multiplexed and the CSI (where the CSI includes a part 1 and a part 2) is further multiplexed on the first CG PUSCH, and another piece of UCI is not multiplexed on the first CG PUSCH, the terminal may transmit the first UCI and the CSI on the first CG PUSCH. Optionally, the first UCI and the CSI are encoded in a separate encoding mode.

Optionally, that the terminal transmits the first UCI on the CG PUSCH includes:

The terminal performs resource mapping based on any one of the following:

(1) The first UCI is mapped starting from the first one available non-demodulation reference signal (Demodulation Reference Signal, DMRS) orthogonal frequency division multiplexing (Orthogonal Frequency Division Multiplexing, OFDM) symbol after the first one actually transmitted DMRS symbol, and the HARQ-ACK and/or the CG-UCI cannot be mapped to an RE in which the first UCI is located.

For example, the first UCI and another piece of UCI are separately encoded, and when resource mapping is performed (a location of the RE occupied by the first UCI is determined) on modulation symbols obtained after the first UCI is encoded, the terminal may perform, starting from the first one available non-DMRS OFDM symbol after the first one actually transmitted DMRS symbol, resource mapping on the modulation symbols obtained after the first UCI is encoded, and then perform resource mapping on modulation symbols obtained after the HARQ-ACK and/or the CG-UCI are/is encoded. The HARQ-ACK and/or the CG-UCI cannot be mapped to the RE in which the first UCI is located (in other words, an order of first mapping the first UCI and then mapping the HARQ-ACK and/or the CG-UCI is used).

Optionally, a same mapping rule may be used for the HARQ-ACK and the CG-UCI, or the HARQ-ACK may be jointly encoded with the CG-UCI. For example, the HARQ-ACK and/or the CG-UCI are/is mapped starting from the first one available non-DMRS OFDM symbol *l* after the first one actually transmitted DMRS symbol, but cannot be mapped to an RE in which the first UCI is located.

(2) The first UCI is mapped starting from the first one available non-DMRS OFDM symbol after the first one actually transmitted DMRS symbol, and the first UCI cannot be mapped to an RE in which the HARQ-ACK and/or the CG-UCI are/is located.

For example, the first UCI and another piece of UCI are separately encoded, resource mapping is first performed on modulation symbols obtained after the HARQ-ACK and/or the CG-UCI are/is encoded, and then, the terminal may perform, starting from the first one available non-DMRS OFDM symbol after the first one actually transmitted DMRS symbol, resource mapping on modulation symbols obtained after the first UCI is encoded. However, the first UCI cannot be mapped to the RE in which the HARQ-ACK and/or the CG-UCI are/is located (in other words, an order of first mapping the HARQ-ACK and/or the CG-UCI and then mapping the first UCI is used).

Optionally, a same mapping rule may be used for the HARQ-ACK and the CG-UCI, or the HARQ-ACK may be jointly encoded with the CG-UCI. For example, the HARQ-ACK and/or the CG-UCI are/is mapped starting from the first one available non-DMRS OFDM symbol after the first one actually transmitted DMRS symbol.

(3) The first UCI is mapped starting from the first one available OFDM symbol after the first one actually transmitted available non-DMRS symbol, and the first UCI cannot be mapped to an RE in which the HARQ-ACK and/or the CG-UCI are/is located.

For example, the first UCI and another piece of UCI are separately encoded, and when resource mapping is performed on modulation symbols obtained after the first UCI is encoded, the terminal may perform, starting from the first one available OFDM symbol after the first one actually transmitted available non-DMRS symbol, resource mapping on the modulation symbols obtained after the first UCI is encoded. However, the first UCI cannot be mapped to the RE in which the HARQ-ACK and/or the CG-UCI are/is located.

Optionally, a same mapping rule may be used for the HARQ-ACK and the CG-UCI, or the HARQ-ACK may be jointly encoded with the CG-UCI. For example, the HARQ-ACK and/or the CG-UCI are/is mapped starting from the first one available non-DMRS OFDM symbol after the first one actually transmitted DMRS symbol.

Optionally, in the foregoing different resource mapping manners, the terminal performs resource mapping on the first UCI in a frequency-domain-first manner (to be specific, mapping is performed to all available REs of a specific symbol in frequency domain, and then mapping is performed to a next symbol).

Optionally, in the foregoing different resource mapping manners, for RE location determining methods of the CG-UCI, the HARQ-ACK, the CSI part 1, and the CSI part 2, resource mapping solutions of corresponding UCI in a current technology may be used.

Optionally, in a case that the first UCI is jointly encoded with another piece of UCI, for a resource mapping manner of modulation symbols obtained after joint encoding, a resource mapping solution of the another piece of UCI in the current technology may be used.

For example, a current mapping manner of the CG-UCI (and/or the HARQ-ACK) is as follows: Mapping is performed starting from the first one available non-DMRS OFDM symbol after the first one actually transmitted DMRS symbol.

A current mapping manner of the CSI part 1 is as follows: mapping is performed starting from the first one available OFDM symbol after the first one actually transmitted available non-DMRS symbol, and mapping cannot be performed to the RE in which the HARQ-ACK and/or the CG-UCI are/is located.

A current mapping manner of the CSI part 2 is as follows: mapping is performed starting from the first one available OFDM symbol after the first one actually transmitted available non-DMRS symbol, and mapping cannot be performed to the RE in which the HARQ-ACK and/or the CG-UCI are/is located and an RE in which the CSI part 1 is located.

Optionally, the method further includes:

The terminal receives configuration information sent by a network-side device. The configuration information includes a second parameter, and the second parameter is used for indicating that the first UCI and/or CG-UCI are/is jointly encoded with a HARQ-ACK.

Optionally, the second parameter may be a higher layer parameter, for example, cg-UCI-Multiplexing, or the second parameter may be another parameter that may be used for indicating that the first UCI and/or the CG-UCI are/is jointly encoded with the HARQ-ACK.

In a current technology, if CG-UCI is included on a CG PUSCH, when a terminal multiplexes a HARQ-ACK on the CG PUSCH, and if the terminal is configured with a higher layer parameter cg-UCI-Multiplexing, the terminal jointly encodes the CG-UCI and the HARQ-ACK, and determines, based on a total quantity of bits of the CG-UCI and the HARQ-ACK and a betaOffset parameter corresponding to the HARQ-ACK, quantities of REs occupied by the CG-UCI and the HARQ-ACK on PUSCH transmission . If the terminal is not configured with the higher layer parameter cg-UCI-Multiplexing, the terminal does not transmit the CG PUSCH and multiplexes the HARQ-ACK on a PUCCH or another PUSCH.

To ensure that the first UCI can be sent to the network-side device, if the terminal is configured to transmit the first UCI on the CG PUSCH, the terminal expects a parameter used for configuring whether the CG-UCI/the first UCI is jointly encoded with the HARQ-ACK. For example, cg-UCI-Multiplexing is always configured.

Therefore, the network-side device configures the second parameter for the terminal, so that the terminal may jointly encode the first UCI and/or the CG-UCI and the HARQ-ACK, to avoid that the terminal does not transmit the first UCI and/or the CG-UCI, thereby effectively ensuring transmission of the first UCI.

Optionally, the method further includes:

The terminal performs, in a case that time-domain resources of a first CG PUSCH used for carrying the first UCI and a PUCCH that carries a HARQ-ACK overlap, transmission based on any one of the following:

in a case that there is a second PUSCH, multiplexing the HARQ-ACK on the second PUSCH for transmission; or
in a case that there is no second PUSCH, transmitting the first CG PUSCH and discarding the HARQ-ACK, or transmitting the PUCCH that carries the HARQ-ACK and discarding the first CG PUSCH.

The second PUSCH is a PUSCH that does not carry the first UCI and that has a time-domain resource overlapping with that of the PUCCH that carries the HARQ-ACK.

For example, if time-domain resources of another PUSCH that does not include the first UCI and the PUCCH that carries the HARQ-ACK overlap, the terminal may multiplex the HARQ-ACK on the another PUSCH that does not include the first UCI for transmission.

For example, if another PUSCH that does not include the first UCI and that has a time-domain resource overlapping with that of the PUCCH that carries the HARQ-ACK cannot be found, the terminal may transmit the first CG PUSCH and discard the HARQ-ACK. Alternatively, the terminal may transmit the PUCCH that carries the HARQ-ACK, discard the first CG PUSCH, and skip transmitting the first UCI.

Optionally, the method further includes:

The terminal multiplexes, in a case that time-domain resources of a PUCCH that carries a HARQ-ACK and a plurality of PUSCHs overlap, the HARQ-ACK on a third PUSCH for transmission.

The terminal determines the third PUSCH according to a principle of preferentially selecting a PUSCH that does not carry the first UCI.

For example, when the time-domain resources of the PUCCH that carries the HARQ-ACK and the plurality of PUSCHs overlap, the terminal may select at least one PUSCH (namely, the third PUSCH) to multiplex the HARQ-ACK. When selecting the third PUSCH, the terminal may preferentially select a PUSCH that does not carry the first UCI.

Optionally, before the terminal multiplexes the HARQ-ACK on the third PUSCH for transmission, the method further includes:

The terminal determines the third PUSCH based on an order of a first priority, a second priority, a third priority, a fourth priority, a fifth priority, and a sixth priority.

The first priority corresponds to a PUSCH that carries aperiodic CSI.

The second priority corresponds to a PUSCH that has an earliest starting slot.

In the third priority, a selection priority of a dynamic grant (Dynamic Grant, DG) PUSCH is higher than a selection priority of the CG PUSCH or a semi-persistent scheduling (Semi-Persistent Scheduling, SP) PUSCH.

The fourth priority corresponds to a PUSCH that does not carry the first UCI.

In the fifth priority, a PUSCH located in a serving cell with a smaller index has a higher selection priority.

In the sixth priority, a PUSCH transmitted earlier has a higher selection priority.

For example, the terminal may first preferentially select, based on the first priority, the PUSCH that carries the aperiodic CSI (A-CSI) to multiplex the HARQ-ACK. If a suitable PUSCH is determined based on the first priority (for example, there is no PUSCH that carries the A-CSI, or there are a plurality of PUSCHs that carry the A-CSI), the PUSCH that has the earliest starting slot is preferentially selected based on the second priority to multiplex the HARQ-ACK. If a suitable PUSCH cannot be determined based on the second priority (for example, there are a plurality of PUSCHs that have the earliest starting slot), the third PUSCH is selected based on the third priority. In the third priority, the selection priority of the DG PUSCH is higher than the selection priority of the CG PUSCH or the SPS PUSCH (where optionally, priorities of the CG PUSCH and the SPS PUSCH may be the same). If a suitable PUSCH cannot be determined based on the third priority (for example, there are a plurality of DG PUSCHs or a plurality of CG PUSCHs and/or SPS PUSCHs), the third PUSCH is selected based on the fourth priority, to be specific, the PUSCH that does not carry the first UCI is preferentially selected to multiplex the HARQ-ACK. If a suitable PUSCH cannot be determined based on the fourth priority (for example, there are a plurality of PUSCHs that do not carry the first UCI), the third PUSCH is selected based on the fifth priority, to be specific, the PUSCH located in the serving cell with the smaller index is preferentially selected to multiplex the HARQ-ACK. If a suitable PUSCH cannot be determined based on the fifth priority (for example, there are a plurality of PUSCHs located in serving cells with a smallest index), the third PUSCH is selected based on the sixth priority, to be specific, the PUSCH transmitted earlier is preferentially selected to multiplex the HARQ-ACK.

Optionally, before the terminal multiplexes the HARQ-ACK on the third PUSCH for transmission, the method further includes:

The terminal determines the third PUSCH based on an order of a first priority, a second priority, a third priority, a fourth priority, a fifth priority, and a sixth priority.

The first priority corresponds to a PUSCH that carries aperiodic CSI.

The second priority corresponds to a PUSCH that does not carry the first UCI.

The third priority corresponds to a PUSCH that has an earliest starting slot.

In the fourth priority, a selection priority of a DG PUSCH is higher than a selection priority of the CG PUSCH or an SPS PUSCH.

In the fifth priority, a PUSCH located in a serving cell with a smaller index has a higher selection priority.

In the sixth priority, a PUSCH transmitted earlier has a higher selection priority.

For example, the terminal may first preferentially select, based on the first priority, the PUSCH that carries the A-CSI to multiplex the HARQ-ACK. If a suitable PUSCH cannot be determined based on the first priority (for example, there is no PUSCH that carries the A-CSI, or there are a plurality of PUSCHs that carry the A-CSI), the PUSCH that does not carry the first UCI is preferentially selected based on the second priority to multiplex the HARQ-ACK. If a suitable PUSCH cannot be determined based on the second priority (for example, there are a plurality of PUSCHs that do not carry the first UCI), the third PUSCH is selected based on the third priority, to be specific, the PUSCH that has the earliest starting slot is preferentially selected to multiplex the HARQ-ACK. If a suitable PUSCH cannot be determined based on the third priority (for example, there are a plurality of PUSCHs that have the earliest starting slot), the third PUSCH is selected based on the fourth priority. In the fourth priority, the selection priority of the DG PUSCH is higher than the selection priority of the CG PUSCH or the SPS PUSCH (where optionally, priorities of the CG PUSCH and the SPS PUSCH may be the same). If a suitable PUSCH cannot be determined based on the fourth priority (for example, there are a plurality of DG PUSCHs or a plurality of CG PUSCHs and/or SPS PUSCHs), the third PUSCH is selected based on the fifth priority, to be specific, the PUSCH located in the serving cell with the smaller index is preferentially selected to multiplex the HARQ-ACK. If a suitable PUSCH cannot be determined based on the fifth priority (for example, there are a plurality of PUSCHs located in serving cells with a smallest index), the third PUSCH is selected based on the sixth priority, to be specific, the PUSCH transmitted earlier is preferentially selected for to multiplex the HARQ-ACK.

Optionally, before the terminal multiplexes the HARQ-ACK on the third PUSCH for transmission, the method further includes:

The terminal determines the third PUSCH based on an order of a first priority, a second priority, a third priority, a fourth priority, a fifth priority, and a sixth priority.

The first priority corresponds to a PUSCH that does not carry the first UCI.

The second priority corresponds to a PUSCH that carries aperiodic CSI.

The third priority corresponds to a PUSCH that has an earliest starting slot.

In the fourth priority, a selection priority of a DG PUSCH is higher than a selection priority of the CG PUSCH or an SPS PUSCH.

In the fifth priority, a PUSCH located in a serving cell with a smaller index has a higher selection priority.

In the sixth priority, a PUSCH transmitted earlier has a higher selection priority.

For example, the terminal may first preferentially select, based on the first priority, the PUSCH that does not carry the first UCI to multiplex the HARQ-ACK. If a suitable PUSCH cannot be determined based on the first priority (for example, there are a plurality of PUSCHs that do not carry the first UCI), the PUSCH that carries the A-CSI is preferentially selected based on the second priority to multiplex the HARQ-ACK. If a suitable PUSCH cannot be determined based on the second priority (for example, there are a plurality of PUSCHs that carry the A-CSI), the third PUSCH is selected based on the third priority, to be specific, the PUSCH that has the earliest starting slot is preferentially selected to multiplex the HARQ-ACK. If a suitable PUSCH cannot be determined based on the third priority (for example, there are a plurality of PUSCHs that have the earliest starting slot), the third PUSCH is selected based on the fourth priority. In the fourth priority, the selection priority of the DG PUSCH is higher than the selection priority of the CG PUSCH or the SPS PUSCH (where optionally, priorities of the CG PUSCH and the SPS PUSCH may be the same). If a suitable PUSCH cannot be determined based on the fourth priority (for example, there are a plurality of DG PUSCHs or a plurality of CG PUSCHs and/or SPS PUSCHs), the third PUSCH is selected based on the fifth priority, to be specific, the PUSCH located in the serving cell with the smaller index is preferentially selected to multiplex the HARQ-ACK. If a suitable PUSCH cannot be determined based on the fifth priority (for example, there are a plurality of PUSCHs located in serving cells with a smallest index), the third PUSCH is selected based on the sixth priority, to be specific, the PUSCH transmitted earlier is preferentially selected for to multiplex the HARQ-ACK.

The following describes the methods provided in the foregoing embodiments of this application by using examples of specific application scenario embodiments.

Embodiment 1

This embodiment provides a solution to how to transmit first UCI.

Specifically, a terminal may determine, based on a value of a parameter betaOffset configured at a higher layer or indicated by activated DCI, a quantity of REs occupied by the first UCI on a CG PUSCH. The value of betaOffset may be configured together with a betaOffset value of a HARQ-ACK and/or CSI or may be independently configured, or the value of betaOffset is equal to the betaOffset value corresponding to the HARQ-ACK and/or the CSI.

In addition, the following manners may alternatively be used for encoding.

(1) If CG-UCI is further included on the PUSCH, the terminal may perform the following:

    a. Jointly encode the first UCI and the CG-UCI.

For example, the first UCI is appended with the CG-UCI (where a sequence may be defined in a protocol or configured at a higher layer), or the first UCI is a part of the CG-UCI (to be specific, the CG-UCI includes two parts of information, where one part is information in current CG-UCI, and one part is information used for indicating a CG PUSCH transmission occasion that is not used).

Optionally, quantities of REs occupied by the CG-UCI and the first UCI on the PUSCH may be determined by using betaOffset values corresponding to the CG-UCI/the first UCI or a larger/smaller/average value of the two parameters.

b. Separately encode the first UCI and the CG-UCI.

Optionally, a base station may separately configure or indicate parameters (for example, betaOffset) used for determining quantities of REs occupied by the first UCI and the CG-UCI on the PUSCH.

Optionally, if the HARQ-ACK and the CSI are further included on the PUSCH, the terminal discards the CSI or the first UCI, and transmits remaining UCI.

Optionally, if the HARQ-ACK/CG-UCI and the CSI are further included on the PUSCH and the CSI includes a CSI part 2, the terminal discards the CSI or the first UCI, and transmits remaining UCI; or the terminal discards the CSI part 2, and transmits remaining UCI.

Optionally, if the CSI is further included on the PUSCH and the CSI includes only a part 1, the terminal transmits the CSI part 1 and remaining UCI, or the terminal discards the CSI.

Optionally, if the CSI is further included on the PUSCH and the CSI includes a part 2, the terminal discards the CSI part 2, and transmits a CSI part 1; or the terminal discards the CSI.

Optionally, if the CSI is further included on the PUSCH and the CSI includes only a part 1, the terminal transmits the CSI part 1, or the terminal discards the CSI.

(2) If the HARQ-ACK is further included on the PUSCH, the terminal may perform the following:

    a. Jointly encode the first UCI and the HARQ-ACK.
    b. Separately encode the first UCI and the HARQ-ACK.

Optionally, the base station may separately configure or indicate parameters (for example, betaOffset) used for determining quantities of REs occupied by the first UCI and the HARQ-ACK on the PUSCH.

Optionally, if the CSI is further included on the PUSCH and the CSI includes a part 2, the terminal discards the CSI part 2, and transmits a CSI part 1; or the terminal discards the CSI.

Optionally, if the CSI is further included on the PUSCH and the CSI includes only a part 1, the terminal transmits the CSI part 1, or the terminal discards the CSI.

(3) If the CG-UCI and the HARQ-ACK are further included on the PUSCH, the terminal may perform the following:

    a. Jointly encode the first UCI, the CG-UCI, and the HARQ-ACK.
    For example, the first UCI is appended with the CG-UCI and the HARQ-ACK (where a sequence may be defined in a protocol or configured at a higher layer), or the first UCI is a part of the CG-UCI (to be specific, the CG-UCI includes two parts of information, where one part is information in current CG-UCI, and one part is information used for indicating a CG PUSCH transmission occasion that is not used).
    b. Jointly encode the CG-UCI and the HARQ-ACK, and independently encode the first UCI.

Optionally, if the CSI is further included on the PUSCH and the CSI includes a part 2, the terminal discards the CSI part 2, and transmits a CSI part 1; or the terminal discards the CSI.

Optionally, if the CSI is further included on the PUSCH and the CSI includes only a part 1, the terminal transmits the CSI part 1, or the terminal discards the CSI.

Resource mapping may be performed, in the following manners, on a modulation symbol obtained after the encoding.

Option 1: The first UCI is mapped starting from the first one available non-DMRS OFDM symbol after the first one actually transmitted DMRS symbol.

Option 2: The HARQ-ACK and/or the CG-UCI are/is mapped starting from the first one available non-DMRS OFDM symbol after the first one actually transmitted DMRS symbol, and the first UCI is mapped starting from the first one available non-DMRS OFDM symbol after the first one actually transmitted DMRS symbol. However, the first UCI cannot be mapped to an RE in which the HARQ-ACK and/or the CG-UCI are/is located. The CSI has a same case as that described above.

Option 3: The first UCI is mapped starting from the first one available OFDM symbol after the first one actually transmitted available non-DMRS symbol, and cannot be mapped to an RE in which the HARQ-ACK and/or the CG-UCI are/is located. The CSI has a same case as that described above.

It should be noted herein that, for Option 1 to Option 3 described above, if the first UCI is jointly encoded with the CG-UCI and/or the HARQ-ACK, or the CSI part 1 or the CSI part 2, a resource mapping manner after the encoding is the same as a resource mapping manner of the current CG-UCI, or HARQ-ACK, or CSI part 1 or CSI part 2.

A manner for mapping the current CG-UCI (and/or the HARQ-ACK) is as follows. Mapping is performed starting from the first one available non-DMRS OFDM symbol after the first one actually transmitted DMRS symbol.

A current mapping manner of the CSI part 1 is as follows: mapping is performed starting from the first one available OFDM symbol after the first one actually transmitted available non-DMRS symbol, and mapping cannot be performed to the RE in which the HARQ-ACK and/or the CG-UCI are/is located.

A current mapping manner of the CSI part 2 is as follows: mapping is performed starting from the first one available OFDM symbol after the first one actually transmitted available non-DMRS symbol, and mapping cannot be performed to the RE in which the HARQ-ACK and/or the CG-UCI are/is located and an RE in which the CSI part 1 is located.

Embodiment 2

In a current technology, if CG-UCI is included on a CG PUSCH, when a terminal multiplexes a HARQ-ACK on the CG PUSCH, and if the terminal is configured with a higher layer parameter cg-UCI-Multiplexing, the terminal jointly encodes the CG-UCI and the HARQ-ACK, and determines, based on a total quantity of bits of the CG-UCI and the HARQ-ACK and a betaOffset value corresponding to the HARQ-ACK, quantities of REs occupied by the CG-UCI and the HARQ-ACK on PUSCH transmission . The betaOffset value is used by the terminal to determine a quantity of REs occupied when the HARQ-ACK, the CSI, or the CG-UCI is multiplexed on the PUSCH. The betaOffset value is configured through DCI or a higher layer. If the terminal is not configured with the higher layer parameter cg-UCI-Multiplexing, the terminal does not transmit the CG PUSCH and multiplexes the HARQ-ACK on a PUCCH or another PUSCH. If the first UCI is a part of the CG-UCI or a same manner as that of the CG-UCI is adopted for the first UCI, the terminal determines, based on configuration information of the base station, whether to jointly encode the first UCI and the HARQ-ACK. Different from current CG-UCI used for decoding a CG PUSCH that currently needs to be transmitted, the first UCI is UCI used for indicating a CG PUSCH transmission occasion that will not be used by the terminal and/or used for indicating an end of data burst of the terminal, to help improve system resource utilization. Therefore, it is necessary to ensure that the first UCI can be sent to the base station. For this, at least one of the following methods may be used.

Method 1: If the terminal is configured to transmit the first UCI on the CG PUSCH, the terminal expects a parameter used for configuring whether the CG-UCI/the first UCI is jointly encoded with the HARQ-ACK. For example, cg-UCI-Multiplexing is always configured. To be specific, if the base station configures or schedules time-domain resources of the CG PUSCH that carries the first UCI and a HARQ-ACK PUCCH to be overlapped, or the HARQ-ACK is to be multiplexed onto the CG PUSCH that carries the first UCI, the base station needs to configure the parameter cg-UCI-Multiplexing.

Method 2: If time-domain resources of the CG PUSCH that includes the first UCI and a HARQ-ACK PUCCH overlap, the followings are included:

Optionally, if transmission of another PUSCH that does not include the first UCI and the HARQ-ACK PUCCH overlap, the terminal transmits the HARQ-ACK, and multiplexes the HARQ-ACK on the another PUSCH that does not include the first UCI.

Optionally, if no transmission of another PUSCH that does not include the first UCI and the HARQ-ACK PUCCH overlap, the terminal transmits the CG PUSCH, and discards the HARQ-ACK; or the terminal transmits the HARQ-ACK PUCCH, and does not transmit the PUSCH whose time domain resource overlaps with that of the HARQ-ACK PUCCH and that includes the first UCI.

Method 2 further includes the following:

Optionally, when time domain resources of one HARQ-ACK PUCCH and a plurality of PUSCHs overlap, the terminal selects, based on the following priority order (descending order), at least one PUSCH to multiplex the HARQ-ACK:

(a) First priority: A PUSCH with A-CSI.
(b) Second priority: A PUSCH that has an earliest starting slot.
(c) Third priority: A dynamic grant PUSCH > a configured grant PUSCH or a semi-persistent scheduling PUSCH.
(d) Fourth priority: A PUSCH that does not include the first UCI > a PUSCH that includes the first UCI.
(e) Fifth priority: A PUSCH located in a small serving cell with a smaller index > a PUSCH located in a serving cell with a larger index.
(f) Sixth priority: A PUSCH transmitted earlier > a PUSCH transmitted later.

Optionally, when time domain resources of one HARQ-ACK PUCCH and a plurality of PUSCHs overlap, the terminal selects, based on the following priority order (descending order), at least one PUSCH to multiplex the HARQ-ACK:

(a) First priority: A PUSCH with A-CSI.
(b) Second priority: A PUSCH that does not include the first UCI > a PUSCH that includes the first UCI.
(c) Third priority: A PUSCH that has an earliest starting slot.
(d) Fourth priority: A dynamic grant PUSCH > a configured grant PUSCH or a semi-persistent scheduling PUSCH.
(e) Fifth priority: A PUSCH located in a small serving cell with a smaller index > a PUSCH located in a serving cell with a larger index.
(f) Sixth priority: A PUSCH transmitted earlier > a PUSCH transmitted later.

Optionally, when time domain resources of one HARQ-ACK PUCCH and a plurality of PUSCHs overlap, the terminal selects, based on the following priority order (descending order), at least one PUSCH to multiplex the HARQ-ACK:

(a) First priority: A PUSCH that does not include the first UCI > a PUSCH that includes the first UCI.
(b) Second priority: A PUSCH with A-CSI.
(c) Third priority: A PUSCH that has an earliest starting slot.
(d) Fourth priority: A dynamic grant PUSCH > a configured grant PUSCH or a semi-persistent scheduling PUSCH.
(e) Fifth priority: A PUSCH located in a small serving cell with a smaller index > a PUSCH located in a serving cell with a larger index.
(f) Sixth priority: A PUSCH transmitted earlier > a PUSCH transmitted later.

The UCI transmission method provided in embodiments of this application may be performed by a UCI transmission apparatus. In embodiments of this application, the UCI transmission apparatus provided in embodiments of this application is described by using an example in which the UCI transmission apparatus performs the UCI transmission method.

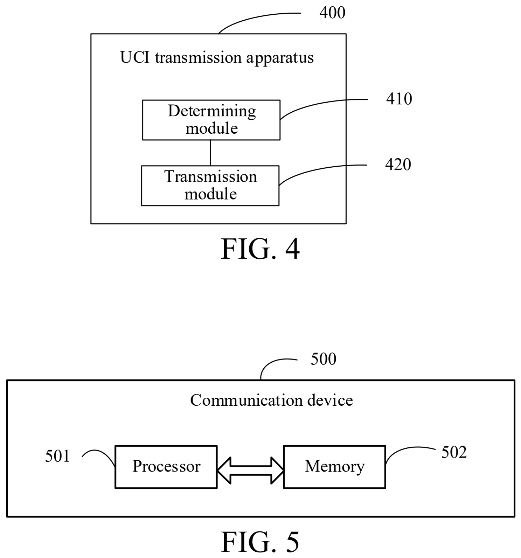

FIG. 4 is a diagram of a structure of a UCI transmission apparatus according to an embodiment of this application. As shown in FIG. 4, this embodiment of this application provides a UCI transmission apparatus 400, which may be used in a terminal and includes:

a determining module 410, configured to determine first UCI, where the first UCI is used for indicating a configured grant physical uplink shared channel CG PUSCH transmission occasion that will not be used by the terminal, and/or is used for indicating an end of data burst of the terminal; and
a transmission module 420, configured to transmit the first UCI on a physical uplink control channel PUCCH or a CG PUSCH.

Optionally, the transmitting the first UCI on the PUCCH comprises:

performing, in a case that time-domain resources of a first PUCCH used for carrying the first UCI and a second PUCCH overlap, transmission based on any one of the following:
discarding the first UCI or UCI carried on the second PUCCH;
multiplexing the first UCI and all or a part of UCI carried on the second PUCCH on one PUCCH for transmission;
determining, based on UCI content carried on the second PUCCH, transmission modes of the first UCI and the UCI carried on the second PUCCH; or
determining, based on a priority of the second PUCCH, transmission modes of the first UCI and the UCI carried on the second PUCCH.

The second PUCCH is a PUCCH that carries at least one of a hybrid automatic repeat request-acknowledgment HARQ-ACK, channel state information CSI, and a scheduling request SR.
Optionally, the transmitting the first UCI on the CG PUSCH includes:
determining, based on a higher layer configuration or an indication of downlink control information DCI, a quantity of resource units REs occupied by the first UCI.
Optionally, the transmitting the first UCI on the CG PUSCH includes:

jointly encoding, in a case that second UCI is multiplexed on a first CG PUSCH used for carrying the first UCI, the first UCI and the second UCI or a part of the second UCI.

The second UCI includes at least one of the CG-UCI, the HARQ-ACK, and the CSI.

Optionally, a quantity of REs occupied after the first UCI is jointly encoded with the second UCI is determined based on one of a first parameter corresponding to the first UCI and a first parameter corresponding to the second UCI, or is determined based on a maximum value, a minimum value, or an average value of the first parameter corresponding to the first UCI and the first parameter corresponding to the second UCI.

Optionally, the transmitting the first UCI on the CG PUSCH includes:

separately encoding, in a case that second UCI is multiplexed on a first CG PUSCH used for carrying the first UCI, the first UCI and the second UCI.

The second UCI includes at least one of the CG-UCI, the HARQ-ACK, and the CSI.

Optionally, in a case that the terminal multiplexes the CSI and at least one of the CG-UCI and the HARQ-ACK on the first CG PUSCH, the transmission module 420 is further configured to:

discard the CSI or the first UCI; or
discard, in a case that the CSI includes a second part, the second part of the CSI.

Optionally, in a case that the terminal multiplexes the CSI on the first CG PUSCH and the CSI includes a first part and a second part, the transmission module 420 is further configured to:

discard the second part of the CSI, and transmit the first part of the CSI; or
discard the CSI.

Optionally, in a case that the terminal multiplexes the CSI on the first CG PUSCH and the CSI includes only a first part, the transmission module 420 is further configured to:

transmit the first part of the CSI; or
discard the CSI.

Optionally, the transmitting the first UCI on the CG PUSCH includes:
performing resource mapping based on any one of the following:

The first UCI is mapped starting from the first one available non-DMRS orthogonal frequency division multiplexing OFDM symbol after the first one actually transmitted demodulation reference signal DMRS symbol, and a HARQ-ACK and/or CG-UCI cannot be mapped to an RE in which the first UCI is located;

the first UCI is mapped starting from the first one available non-DMRS OFDM symbol after the first one actually transmitted DMRS symbol, and the first UCI cannot be mapped to an RE in which the HARQ-ACK and/or the CG-UCI are/is located; or
the first UCI is mapped starting from the first one available OFDM symbol after the first one actually transmitted available non-DMRS symbol, and the first UCI cannot be mapped to an RE in which the HARQ-ACK and/or the CG-UCI are/is located.

Optionally, the transmission module 420 is further configured to:
receive configuration information sent by a network-side device, where the configuration information includes a second parameter, and the second parameter is used for indicating that the first UCI and/or CG-UCI are/is jointly encoded with a HARQ-ACK.

Optionally, the transmission module 420 is further configured to:
perform, in a case that time-domain resources of a first CG PUSCH used for carrying the first UCI and a PUCCH that carries a HARQ-ACK overlap, transmission based on any one of the following:

in a case that there is a second PUSCH, multiplexing the HARQ-ACK on the second PUSCH for transmission; or
in a case that there is no second PUSCH, transmitting the first CG PUSCH and discarding the HARQ-ACK, or transmitting the PUCCH that carries the HARQ-ACK and discarding the first CG PUSCH.

The second PUSCH is a PUSCH that does not carry the first UCI and that has a time-domain resource overlapping with that of the PUCCH that carries the HARQ-ACK.

Optionally, the transmission module 420 is further configured to:
multiplex, in a case that time-domain resources of a PUCCH that carries a HARQ-ACK and a plurality of PUSCHs overlap, the HARQ-ACK on a third PUSCH for transmission.

The terminal determines the third PUSCH according to a principle of preferentially selecting a PUSCH that does not carry the first UCI.

Optionally, the determining module 410 is further configured to:

determine the third PUSCH based on an order of a first priority, a second priority, a third priority, a fourth priority, a fifth priority, and a sixth priority.

The first priority corresponds to a PUSCH that carries aperiodic CSI.

The second priority corresponds to a PUSCH that has an earliest starting slot.

In the third priority, a selection priority of a dynamic grant DG PUSCH is higher than a selection priority of the CG PUSCH or a semi-persistent scheduling SPS PUSCH.

The fourth priority corresponds to a PUSCH that does not carry the first UCI.

In the fifth priority, a PUSCH located in a serving cell with a smaller index has a higher selection priority.

In the sixth priority, a PUSCH transmitted earlier has a higher selection priority.

Optionally, the determining module 410 is further configured to:

determine the third PUSCH based on an order of a first priority, a second priority, a third priority, a fourth priority, a fifth priority, and a sixth priority.

The first priority corresponds to a PUSCH that carries aperiodic CSI.

The second priority corresponds to a PUSCH that does not carry the first UCI.

The third priority corresponds to a PUSCH that has an earliest starting slot.

In the fourth priority, a selection priority of a DG PUSCH is higher than a selection priority of the CG PUSCH or an SPS PUSCH.

In the fifth priority, a PUSCH located in a serving cell with a smaller index has a higher selection priority.

In the sixth priority, a PUSCH transmitted earlier has a higher selection priority.

Optionally, the determining module 410 is further configured to:

determine the third PUSCH based on an order of a first priority, a second priority, a third priority, a fourth priority, a fifth priority, and a sixth priority.

The first priority corresponds to a PUSCH that does not carry the first UCI.

The second priority corresponds to a PUSCH that carries aperiodic CSI.

The third priority corresponds to a PUSCH that has an earliest starting slot.

In the fourth priority, a selection priority of a DG PUSCH is higher than a selection priority of the CG PUSCH or an SPS PUSCH.

In the fifth priority, a PUSCH located in a serving cell with a smaller index has a higher selection priority.

In the sixth priority, a PUSCH transmitted earlier has a higher selection priority.

In embodiments of this application, after determining first UCI that needs to be sent to a network-side device (for example, a base station), a terminal may transmit the first UCI by using a PUCCH or a CG PUSCH, to support transmission of the first UCI, so that the network-side device receives corresponding indication information, thereby helping improve effectiveness of a communication system.

The UCI transmission apparatus in embodiments of this application may be an electronic device, for example, an electronic device with an operating system, or may be a component in the electronic device, for example, an integrated circuit or a chip. The electronic device may be a terminal or another device other than the terminal. In an example, the terminal may include but is not limited to the foregoing listed types of the terminal 11, and the another device may be a server, a network attached storage (Network Attached Storage, NAS), or the like. This is not specifically limited in embodiments of this application.

The UCI transmission apparatus provided in embodiments of this application can implement the processes implemented in the foregoing method embodiments and achieve the same technical effects. To avoid repetition, details are not described herein again.

FIG. 5 is a diagram of a structure of a communication device according to an embodiment of this application. As shown in FIG. 5, this embodiment of this application further provides a communication device 500, including a processor 501 and a memory 502. The memory 502 stores a program or instructions that can run on the processor 501. For example, when the communication device 500 is a terminal, the program or the instructions, when being executed by the processor 501, implement various steps of the embodiment of the foregoing UCI transmission method corresponding to the terminal, and same technical effects can be achieved. To avoid repetition, details are not described herein.

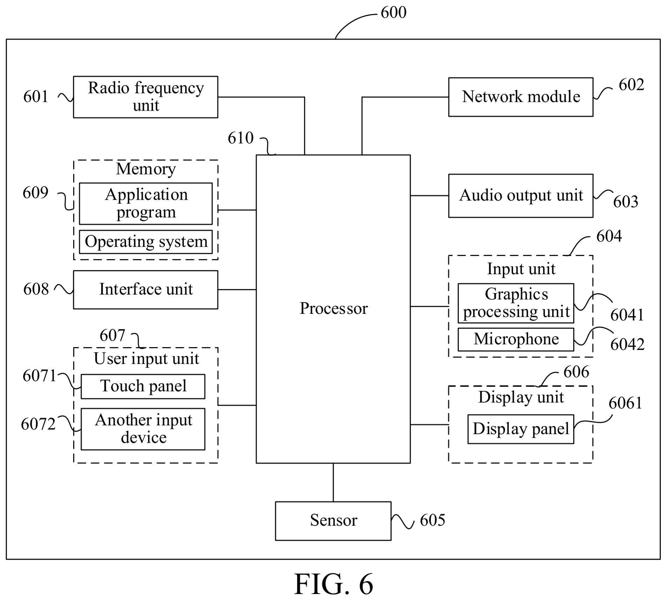

An embodiment of this application further provides a terminal, including a processor and a communication interface. The processor is configured to: determine first UCI, where the first UCI is used for indicating a CG PUSCH transmission occasion that will not be used by the terminal, and/or is used for indicating an end of data burst of the terminal. The communication interface is configured to: transmit the first UCI on a PUCCH or a CG PUSCH. This terminal embodiment corresponds to the foregoing terminal-side method embodiment. Various implementation processes and implementations of the foregoing method embodiment are all applicable to this terminal embodiment, and same technical effects can be achieved. Specifically, FIG. 6 is a diagram of a hardware structure of a terminal according to an embodiment of this application.

The terminal 600 includes, but is not limited to: at least some components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (such as a battery) for supplying power to the components. The power supply may be logically connected to the processor 610 through a power management system, to implement functions such as charging, discharging, and power consumption management through the power management system. The terminal structure shown in FIG. 6 constitutes no limitation on the terminal, and the terminal may include more or fewer components than those shown in the figure, or some components may be combined, or a different component deployment may be used. Details are not described herein.

It should be understood that, in this embodiment of this application, the input unit 604 may include a graphics processing unit (Graphics Processing Unit, GPU) 6041 and a microphone 6042. The graphics processing unit 6041 processes image data of a static picture or a video that is obtained by an image capture apparatus (for example, a camera) in a video capture mode or an image capture mode. The display unit 606 may include a display panel 6061. The display panel 6061 may be configured in a form of a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include, but not limited to, a physical keyboard, a functional key (such as a volume control key or a switch key), a track ball, a mouse, and a joystick. Details are not described herein.

In this embodiment of this application, after receiving downlink data from a network-side device, the radio frequency unit 601 may transmit the downlink data to the processor 610 for processing. In addition, the radio frequency unit 601 may send uplink data to the network-side device. Usually, the radio frequency unit 601 includes, but is not limited to, an antenna, an amplifier, a transceiver, a coupler, a low noise amplifier, a duplexer, and the like.

The memory 609 can be configured to store a software program or instructions and various data. The memory 609 may mainly include a first storage area for storing the program or the instructions and a second storage area for storing the data. The first storage area may store an operating system, an application program or instructions required by at least one function (for example, a sound playback function and an image display function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The non-volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DR RAM). The memory 609 in this embodiment of this application includes, but is not limited to, these memories and any other suitable types of memories.

The processor 610 may include one or more processing units. Optionally, the processor 610 integrates an application processor and a modem processor, where the application processor mainly processes operations related to an operating system, a user interface, an application program, and the like, and the modem processor, for example, a baseband processor, mainly processes a wireless communication signal. It may be understood that, the modem processor may not be integrated into the processor 610.

The processor 610 is configured to determine first UCI, where the first UCI is used for indicating a configured grant physical uplink shared channel CG PUSCH transmission occasion that will not be used by the terminal, and/or is used for indicating an end of data burst of the terminal.

The radio frequency unit 601 is configured to transmit the first UCI on a physical uplink control channel PUCCH or a CG PUSCH.

Optionally, the transmitting the first UCI on the PUCCH comprises:

performing, in a case that time-domain resources of a first PUCCH used for carrying the first UCI and a second PUCCH overlap, transmission based on any one of the following:

discarding the first UCI or UCI carried on the second PUCCH;
multiplexing the first UCI and all or a part of UCI carried on the second PUCCH on one PUCCH for transmission;
determining, based on UCI content carried on the second PUCCH, transmission modes of the first UCI and the UCI carried on the second PUCCH; or
determining, based on a priority of the second PUCCH, transmission modes of the first UCI and the UCI carried on the second PUCCH.

The second PUCCH is a PUCCH that carries at least one of a hybrid automatic repeat request-acknowledgment HARQ-ACK, channel state information CSI, and a scheduling request SR.

Optionally, the transmitting the first UCI on the CG PUSCH includes:
determining, based on a higher layer configuration or an indication of downlink control information DCI, a quantity of resource units REs occupied by the first UCI.

Optionally, the transmitting the first UCI on the CG PUSCH includes:
jointly encoding, in a case that second UCI is multiplexed on a first CG PUSCH used for carrying the first UCI, the first UCI and the second UCI or a part of the second UCI.

The second UCI includes at least one of the CG-UCI, the HARQ-ACK, and the CSI.

Optionally, a quantity of REs occupied after the first UCI is jointly encoded with the second UCI is determined based on one of a first parameter corresponding to the first UCI and a first parameter corresponding to the second UCI, or is determined based on a maximum value, a minimum value, or an average value of the first parameter corresponding to the first UCI and the first parameter corresponding to the second UCI.

Optionally, the transmitting the first UCI on the CG PUSCH includes:
separately encoding, in a case that second UCI is multiplexed on a first CG PUSCH used for carrying the first UCI, the first UCI and the second UCI.

The second UCI includes at least one of the CG-UCI, the HARQ-ACK, and the CSI.

Optionally, in a case that the terminal multiplexes the CSI and at least one of the CG-UCI and the HARQ-ACK on the first CG PUSCH, the radio frequency unit 601 is further configured to:

discard the CSI or the first UCI; or
discard, in a case that the CSI includes a second part, the second part of the CSI.

Optionally, in a case that the terminal multiplexes the CSI on the first CG PUSCH and the CSI includes a first part and a second part, the radio frequency unit 601 is further configured to:

discard the second part of the CSI, and transmit the first part of the CSI; or
discard the CSI.

Optionally, in a case that the terminal multiplexes the CSI on the first CG PUSCH and the CSI includes only a first part, the radio frequency unit 601 is further configured to:

transmit the first part of the CSI; or
discard the CSI.

Optionally, the transmitting the first UCI on the CG PUSCH includes:
performing resource mapping based on any one of the following:

The first UCI is mapped starting from the first one available non-DMRS orthogonal frequency division multiplexing OFDM symbol after the first one actually transmitted demodulation reference signal DMRS symbol, and a HARQ-ACK and/or CG-UCI cannot be mapped to an RE in which the first UCI is located;

the first UCI is mapped starting from the first one available non-DMRS OFDM symbol after the first one actually transmitted DMRS symbol, and the first UCI cannot be mapped to an RE in which the HARQ-ACK and/or the CG-UCI are/is located; or
the first UCI is mapped starting from the first one available OFDM symbol after the first one actually transmitted available non-DMRS symbol, and the first UCI cannot be mapped to an RE in which the HARQ-ACK and/or the CG-UCI are/is located.

Optionally, the radio frequency unit 601 is further configured to:
receive configuration information sent by a network-side device, where the configuration information includes a second parameter, and the second parameter is used for indicating that the first UCI and/or CG-UCI are/is jointly encoded with a HARQ-ACK.

Optionally, the radio frequency unit 601 is further configured to:
perform, in a case that time-domain resources of a first CG PUSCH used for carrying the first UCI and a PUCCH that carries a HARQ-ACK overlap, transmission based on any one of the following:

in a case that there is a second PUSCH, multiplexing the HARQ-ACK on the second PUSCH for transmission; or
in a case that there is no second PUSCH, transmitting the first CG PUSCH and discarding the HARQ-ACK, or
transmitting the PUCCH that carries the HARQ-ACK and discarding the first CG PUSCH.

The second PUSCH is a PUSCH that does not carry the first UCI and that has a time-domain resource overlapping with that of the PUCCH that carries the HARQ-ACK.

Optionally, the radio frequency unit 601 is further configured to:

multiplex, in a case that time-domain resources of a PUCCH that carries a HARQ-ACK and a plurality of PUSCHs overlap, the HARQ-ACK on a third PUSCH for transmission.

The terminal determines the third PUSCH according to a principle of preferentially selecting a PUSCH that does not carry the first UCI.

Optionally, the processor 610 is further configured to:

determine the third PUSCH based on an order of a first priority, a second priority, a third priority, a fourth priority, a fifth priority, and a sixth priority.

The first priority corresponds to a PUSCH that carries aperiodic CSI.

The second priority corresponds to a PUSCH that has an earliest starting slot.

In the third priority, a selection priority of a dynamic grant DG PUSCH is higher than a selection priority of the CG PUSCH or a semi-persistent scheduling SPS PUSCH.

The fourth priority corresponds to a PUSCH that does not carry the first UCI.

In the fifth priority, a PUSCH located in a serving cell with a smaller index has a higher selection priority.

In the sixth priority, a PUSCH transmitted earlier has a higher selection priority.

Optionally, the processor 610 is further configured to:

determine the third PUSCH based on an order of a first priority, a second priority, a third priority, a fourth priority, a fifth priority, and a sixth priority.

The first priority corresponds to a PUSCH that carries aperiodic CSI.

The second priority corresponds to a PUSCH that does not carry the first UCI.

The third priority corresponds to a PUSCH that has an earliest starting slot.

In the fourth priority, a selection priority of a DG PUSCH is higher than a selection priority of the CG PUSCH or an SPS PUSCH.

In the fifth priority, a PUSCH located in a serving cell with a smaller index has a higher selection priority.

In the sixth priority, a PUSCH transmitted earlier has a higher selection priority.

Optionally, the processor 610 is further configured to:

determine the third PUSCH based on an order of a first priority, a second priority, a third priority, a fourth priority, a fifth priority, and a sixth priority.

The first priority corresponds to a PUSCH that does not carry the first UCI.

The second priority corresponds to a PUSCH that carries aperiodic CSI.

The third priority corresponds to a PUSCH that has an earliest starting slot.

In the fourth priority, a selection priority of a DG PUSCH is higher than a selection priority of the CG PUSCH or an SPS PUSCH.

In the fifth priority, a PUSCH located in a serving cell with a smaller index has a higher selection priority.

In the sixth priority, a PUSCH transmitted earlier has a higher selection priority.

In embodiments of this application, after determining first UCI that needs to be sent to a network-side device (for example, a base station), a terminal may transmit the first UCI by using a PUCCH or a CG PUSCH, to support transmission of the first UCI, so that the network-side device receives corresponding indication information, thereby helping improve effectiveness of a communication system.

An embodiment of this application further provides a readable storage medium. The readable storage medium stores a program or instructions. The program or the instructions, when being executed by a processor, implement the processes of the foregoing UCI transmission method embodiments, and same technical effects can be achieved. To avoid repetition, details are not described herein.

The processor is the processor in the terminal described in the foregoing embodiments. The readable storage medium includes a computer-readable storage medium, for example, a computer read-only memory ROM, a random access memory RAM, a magnetic disk, an optical disc, or the like.

An embodiment of this application further provides a chip. The chip includes a processor and a communication interface. The communication interface is coupled to the processor. The processor is configured to run a program or instructions to implement the processes of the foregoing UCI transmission method embodiments, and same technical effects can be achieved. To avoid repetition, details are not described herein.

It should be understood that the chip mentioned in this embodiment of this application may also be referred to as a system-level chip, a system chip, a chip system, a system on a chip, or the like.

An embodiment of this application further provides a computer program/program product, where the computer program/program product is stored in a storage medium. The computer program/program product is executed by at least one processor to implement the processes of the foregoing UCI transmission method embodiments, and same technical effects can be achieved. To avoid repetition, details are not described herein.

An embodiment of this application further provides a UCI transmission system, including: a terminal and a network-side device, where the terminal can be configured to perform the foregoing UCI transmission method.

It should be noted that, the terms "include", "comprise", or any other variations thereof are intended to cover a non-exclusive inclusion, so that a process, a method, an article, or an apparatus including a series of elements not only includes those elements, but also includes other elements that are not explicitly listed, or also includes inherent elements of the process, the method, the article, or the apparatus. Without more restrictions, the elements defined by the sentence "including a ..." do not exclude the existence of other identical elements in the process, method, article, or apparatus including the elements. In addition, it should be noted that the scope of the method and apparatus in the implementations of this application is not limited to performing functions in the order shown or discussed, and may further include performing functions in a substantially simultaneous manner or in a reverse order according to the functions involved. For example, the described methods may be performed in an order different from the described order, and various steps may be added, omitted, or combined. In addition, features described in some examples may be combined in other examples.

According to the descriptions in the foregoing implementations, a person skilled in the art may clearly understand that the method according to the foregoing embodiments may be implemented by relying on software and a necessary general-purpose hardware platform. Certainly, the hardware may be used, but the former is a better implementation in many cases. Based on such an understanding, the technical solutions of this application essentially, or the part contributing to the prior art, may be embodied in a form of a computer software product. The computer software product is stored in a storage medium (for example, a ROM/RAM, a magnetic disk, or an optical disc), and includes several instructions to enable a terminal (which may be a mobile phone, a computer, a server, an air conditioner, a network device, or the like) to perform the methods described in the embodiments of this application.

The embodiments of this application are described above with reference to the accompanying drawings. However, this application is not limited to the specific implementations described above, and the specific implementations described above are merely examples and not limitative. Those of ordinary skill in the art may make various variations under the teaching of this application without departing from the purpose of this application and the protection scope of the claims, and such variations shall all fall within the protection scope of this application.

## Claims

1. An uplink control information UCI transmission method, comprising:

    determining, by a terminal, first UCI, wherein the first UCI is used for indicating a configured grant physical uplink shared channel CG PUSCH transmission occasion that will not be used by the terminal, and/or is used for indicating an end of data burst of the terminal; and
    transmitting, by the terminal, the first UCI on a physical uplink control channel PUCCH or a CG PUSCH.

2. The UCI transmission method according to claim 1, wherein the transmitting, by the terminal, the first UCI on the PUCCH comprises:
    performing, by the terminal in a case that time-domain resources of a first PUCCH used for carrying the first UCI and a second PUCCH overlap, transmission based on any one of the following:

    discarding the first UCI or UCI carried on the second PUCCH;
    multiplexing the first UCI and all or a part of UCI carried on the second PUCCH on one PUCCH for transmission;
    determining, based on UCI content carried on the second PUCCH, transmission modes of the first UCI and the UCI carried on the second PUCCH; or
    determining, based on a priority of the second PUCCH, transmission modes of the first UCI and the UCI carried on the second PUCCH, wherein
    the second PUCCH is a PUCCH that carries at least one of a hybrid automatic repeat request-acknowledgment HARQ-ACK, channel state information CSI, and a scheduling request SR.

3. The UCI transmission method according to claim 1, wherein the transmitting, by the terminal, the first UCI on the CG PUSCH comprises:
    determining, by the terminal based on a higher layer configuration or an indication of downlink control information DCI, a quantity of resource units REs occupied by the first UCI.

4. The UCI transmission method according to claim 1, wherein the transmitting, by the terminal, the first UCI on the CG PUSCH comprises:

> jointly encoding, by the terminal in a case that second UCI is multiplexed on a first CG PUSCH used for carrying the first UCI, the first UCI and the second UCI or a part of the second UCI, wherein
> the second UCI comprises at least one of CG-UCI, a HARQ-ACK, and CSI.

5. The UCI transmission method according to claim 4, wherein a quantity of REs occupied after the first UCI is jointly encoded with the second UCI is determined based on one of a first parameter corresponding to the first UCI and a first parameter corresponding to the second UCI, or is determined based on a maximum value, a minimum value, or an average value of the first parameter corresponding to the first UCI and the first parameter corresponding to the second UCI.

6. The UCI transmission method according to claim 1, wherein the transmitting, by the terminal, the first UCI on the CG PUSCH comprises:

> separately encoding, by the terminal in a case that second UCI is multiplexed on a first CG PUSCH used for carrying the first UCI, the first UCI and the second UCI, wherein
> the second UCI comprises at least one of CG-UCI, a HARQ-ACK, and CSI.

7. The UCI transmission method according to claim 6, wherein in a case that the terminal multiplexes the CSI and at least one of the CG-UCI and the HARQ-ACK on the first CG PUSCH, the method further comprises:

> discarding, by the terminal, the CSI or the first UCI; or
> discarding, by the terminal in a case that the CSI comprises a second part, the second part of the CSI.

8. The UCI transmission method according to claim 6, wherein in a case that the terminal multiplexes the CSI on the first CG PUSCH and the CSI comprises a first part and a second part, the method further comprises:

> discarding, by the terminal, the second part of the CSI, and transmitting the first part of the CSI; or
> discarding, by the terminal, the CSI.

9. The UCI transmission method according to claim 6, wherein in a case that the terminal multiplexes the CSI on the first CG PUSCH and the CSI comprises only a first part, the method further comprises:

> transmitting, by the terminal, the first part of the CSI; or
> discarding, by the terminal, the CSI.

10. The UCI transmission method according to claim 1, wherein the transmitting, by the terminal, the first UCI on the CG PUSCH comprises:
performing, by the terminal, resource mapping based on any one of the following:

> the first UCI is mapped starting from the first one available non-DMRS orthogonal frequency division multiplexing OFDM symbol after the first one actually transmitted demodulation reference signal DMRS symbol, and a HARQ-ACK and/or CG-UCI cannot be mapped to an RE in which the first UCI is located;
> the first UCI is mapped starting from the first one available non-DMRS OFDM symbol after the first one actually transmitted DMRS symbol, and the first UCI cannot be mapped to an RE in which the HARQ-ACK and/or the CG-UCI are/is located; or
> the first UCI is mapped starting from the first one available OFDM symbol after the first one actually transmitted available non-DMRS symbol, and the first UCI cannot be mapped to an RE in which the HARQ-ACK and/or the CG-UCI are/is located.

11. The UCI transmission method according to claim 1, wherein the method further comprises:
receiving, by the terminal, configuration information sent by a network-side device, wherein the configuration information comprises a second parameter, and the second parameter is used for indicating that the first UCI and/or CG-UCI are/is jointly encoded with a HARQ-ACK.

12. The UCI transmission method according to claim 1, wherein the method further comprises:

performing, by the terminal in a case that time-domain resources of a first CG PUSCH used for carrying the first UCI and a PUCCH that carries a HARQ-ACK overlap, transmission based on any one of the following:

in a case that there is a second PUSCH, multiplexing the HARQ-ACK on the second PUSCH for transmission; or in a case that there is no second PUSCH, transmitting the first CG PUSCH and discarding the HARQ-ACK, or transmitting the PUCCH that carries the HARQ-ACK and discarding the first CG PUSCH, wherein the second PUSCH is a PUSCH that does not carry the first UCI and that has a time-domain resource overlapping with that of the PUCCH that carries the HARQ-ACK.

13. The UCI transmission method according to claim 1, wherein the method further comprises:

multiplexing, by the terminal in a case that time-domain resources of a PUCCH that carries a HARQ-ACK and a plurality of PUSCHs overlap, the HARQ-ACK on a third PUSCH for transmission, wherein the terminal determines the third PUSCH according to a principle of preferentially selecting a PUSCH that does not carry the first UCI.

14. The UCI transmission method according to claim 13, wherein before the multiplexing, by the terminal, the HARQ-ACK on the third PUSCH for transmission, the method further comprises:

determining, by the terminal, the third PUSCH based on an order of a first priority, a second priority, a third priority, a fourth priority, a fifth priority, and a sixth priority, wherein the first priority corresponds to a PUSCH that carries aperiodic CSI; the second priority corresponds to a PUSCH that has an earliest starting slot; in the third priority, a selection priority of a dynamic grant DG PUSCH is higher than a selection priority of the CG PUSCH or a semi-persistent scheduling SPS PUSCH; the fourth priority corresponds to a PUSCH that does not carry the first UCI; in the fifth priority, a PUSCH located in a serving cell with a smaller index has a higher selection priority; and in the sixth priority, a PUSCH transmitted earlier has a higher selection priority.

15. The UCI transmission method according to claim 13, wherein before the multiplexing, by the terminal, the HARQ-ACK on the third PUSCH for transmission, the method further comprises:

determining, by the terminal, the third PUSCH based on an order of a first priority, a second priority, a third priority, a fourth priority, a fifth priority, and a sixth priority, wherein the first priority corresponds to a PUSCH that carries aperiodic CSI; the second priority corresponds to a PUSCH that does not carry the first UCI; the third priority corresponds to a PUSCH that has an earliest starting slot; in the fourth priority, a selection priority of a DG PUSCH is higher than a selection priority of the CG PUSCH or an SPS PUSCH; in the fifth priority, a PUSCH located in a serving cell with a smaller index has a higher selection priority; and in the sixth priority, a PUSCH transmitted earlier has a higher selection priority.

16. The UCI transmission method according to claim 13, wherein before the multiplexing, by the terminal, the HARQ-ACK on the third PUSCH for transmission, the method further comprises:

determining, by the terminal, the third PUSCH based on an order of a first priority, a second priority, a third priority, a fourth priority, a fifth priority, and a sixth priority, wherein the first priority corresponds to a PUSCH that does not carry the first UCI; the second priority corresponds to a PUSCH that carries aperiodic CSI; the third priority corresponds to a PUSCH that has an earliest starting slot; in the fourth priority, a selection priority of a DG PUSCH is higher than a selection priority of the CG PUSCH or an SPS PUSCH; in the fifth priority, a PUSCH located in a serving cell with a smaller index has a higher selection priority; and in the sixth priority, a PUSCH transmitted earlier has a higher selection priority.

17. An uplink control information UCI transmission apparatus, used in a terminal and comprising:

a determining module, configured to determine first UCI, wherein the first UCI is used for indicating a configured grant physical uplink shared channel CG PUSCH transmission occasion that will not be used by the terminal, and/or is used for indicating an end of data burst of the terminal; and

a transmission module, configured to transmit the first UCI on a physical uplink control channel PUCCH or a CG PUSCH.

18. A communication device, comprising a processor and a memory, wherein the memory stores a program or instructions that can run on the processor, and the program or the instructions, when being executed by the processor, implement the UCI transmission method according to any one of claims 1 to 16.

19. A readable storage medium, wherein the readable storage medium stores a program or instructions, and the program or the instructions, when being executed by a processor, implement the UCI transmission method according to any one of claims 1 to 16.

20. A computer program product, wherein the computer program product is stored in a storage medium, and the computer program product is executed by at least one processor to implement the UCI transmission method according to any one of claims 1 to 16.

21. A chip, wherein the chip comprises a processor and a communication interface, the communication interface is coupled to the processor, and the processor is configured to execute a program or instructions, to implement the UCI transmission method according to any one of claims 1 to 16.

**FIG. 1**

**FIG. 2**

A terminal determines first UCI, where the first UCI is used for indicating a configured grant physical uplink shared channel CG PUSCH transmission occasion that will not be used by the terminal, and/or is used for indicating an end of data burst of the terminal — 300

The terminal transmits the first UCI on a physical uplink control channel PUCCH or a CG PUSCH — 301

**FIG. 3**

400

UCI transmission apparatus

Determining
module — 410

Transmission
module — 420

FIG. 4

500

Communication device

501 — Processor ⟺ Memory — 502

FIG. 5

FIG. 6

## INTERNATIONAL SEARCH REPORT

| International application No. |
| --- |
| **PCT/CN2023/142462** |

**A.    CLASSIFICATION OF SUBJECT MATTER**

H04W72/21(2023.01)i;  H04W72/53(2023.01)i;  H04W72/00(2023.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE, 3GPP: 释放, 回收, 空余, 去激活, 上行传输, 资源, 传输时机, 指示, 请求, 通知, 冲突, 重叠, 复用, 优先级, 丢弃, 数据突发结束, UCI , release, PUSCH, CG PUSCH, joint coding , discard, drop, end of data burst, notifications, indication, conflict, overlap, priority

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 117082627 A (VIVO COMMUNICATION TECHNOLOGY CO., LTD.) 17 November 2023 (2023-11-17) description, paragraphs [0061]-[0102] | 1, 17-21 |
| PX | US 2023254850 A1 (ELECTRONICS & TELECOMMUNICATIONS RES INST) 10 August 2023 (2023-08-10) description, paragraphs [0252]-[0254] | 1, 17-21 |
| X | QUALCOMM INC. "Enhancements to configured grants for NR unlicensed" *3GPP TSG RAN WG1 Meeting #99, R1-1912941*, 09 November 2019 (2019-11-09), section 2.4 | 1, 17-21 |
| X | VIVO. "Uplink XR Traffic Information for Power Saving" *3GPP TSG-RAN WG2 Meeting #120, R2-2211495*, No. tsgr2_120, 04 November 2022 (2022-11-04), section 2 | 1, 17-21 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 January 2024** | **24 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/142462** |

### C. DOCUMENTS CONSIDERED TO BE RELEVANT

| Category* | Citation of document, with indication, where appropriate, of the relevant passages | Relevant to claim No. |
| --- | --- | --- |
| Y | QUALCOMM INC. "Enhancements to configured grants for NR unlicensed" *3GPP TSG RAN WG1 Meeting #99, R1-1912941*, 09 November 2019 (2019-11-09), section 2.4 | 2-16 |
| Y | VIVO. "Uplink XR Traffic Information for Power Saving" *3GPP TSG-RAN WG2 Meeting #120, R2-2211495*, No. tsgr2_120, 04 November 2022 (2022-11-04), section 2 | 2-16 |
| Y | CN 111278143 A (VIVO COMMUNICATION TECHNOLOGY CO., LTD.) 12 June 2020 (2020-06-12) description, paragraphs [0034]-[0100] | 2, 13-16 |
| Y | CN 111836310 A (VIVO COMMUNICATION TECHNOLOGY CO., LTD.) 27 October 2020 (2020-10-27) description, paragraphs [0074]-[0099] | 3-12 |
| Y | CN 113271179 A (HUAWEI TECHNOLOGIES CO., LTD.) 17 August 2021 (2021-08-17) description, paragraphs [0087]-[0142] | 3-12 |
| A | US 2022053549 A1 (QUALCOMM INC.) 17 February 2022 (2022-02-17) entire document | 1-21 |

Form PCT/ISA/210 (second sheet) (July 2022)

**INTERNATIONAL SEARCH REPORT**
Information on patent family members

International application No.

**PCT/CN2023/142462**

| Patent document cited in search report | | | Publication date (day/month/year) | Patent family member(s) | | | Publication date (day/month/year) |
|---|---|---|---|---|---|---|---|
| CN | 117082627 | A | 17 November 2023 | None | | | |
| US | 2023254850 | A1 | 10 August 2023 | KR | 20230110205 | A | 21 July 2023 |
| CN | 111278143 | A | 12 June 2020 | WO | 2020134382 | A1 | 02 July 2020 |
| CN | 111836310 | A | 27 October 2020 | None | | | |
| CN | 113271179 | A | 17 August 2021 | WO | 2021159979 | A1 | 19 August 2021 |
| US | 2022053549 | A1 | 17 February 2022 | WO | 2022036004 | A1 | 17 February 2022 |

Form PCT/ISA/210 (patent family annex) (July 2022)

**EP 4 645 993 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211714270X